# EUROPÄISCHE PATENTSCHRIFT

(11) **EP 3 009 648 B1**
(45) Veröffentlichungstag und Bekanntmachung des Hinweises auf die Patenterteilung: **09.05.2018**
(21) Anmeldenummer: 15189354.2
(22) Anmeldetag: 12.10.2015
(51) Int. Cl.: F02K 1/72, B64D 29/06, F02K 1/76

(54) **FLUGGASTURBINENSCHUBUMKEHRVORRICHTUNG MIT FÜHRUNGSSCHIENE**
AVIATION GAS TURBINE THRUST REVERSING DEVICE WITH GUIDE RAIL
DISPOSITIF D'INVERSION DE POUSSEE DE TURBINE A GAZ VOLATILE EQUIPE D'UN RAIL DE GUIDAGE

(30) Priorität: 16.10.2014 DE 102014221052
(43) Veröffentlichungstag der Anmeldung: 20.04.2016
(73) Patentinhaber: Rolls-Royce Deutschland Ltd & Co KG, 15827 Blankenfelde-Mahlow (DE); Premium AEROTEC GmbH, 86179 Augsburg (DE)
(72) Erfinder: TODOROVIC, Predrag, 10437 Berlin (DE); IRIMIE, Sergiu, 86179 Augsburg (DE)
(74) Vertreter: Hoefer & Partner Patentanwälte mbB

(56) Entgegenhaltungen:
- EP-A1- 0 155 887
- WO-A1-2012/022900
- WO-A1-2014/023901
- WO-A1-2014/072655
- FR-A1- 2 926 605

## Beschreibung

Die Erfindung bezieht sich auf eine Fluggasturbinenschubumkehrvorrichtung mit einem Triebwerk, mit einer Triebwerksverkleidung sowie mit mehreren, am Umfangsbereich angeordneten, lageveränderbaren Umlenkelementen.

Im Einzelnen bezieht sich die Erfindung auf ein kompakt bauendes Führungsschienenkonzept einer Fluggasturbinen-Schubumkehrvorrichtung, welche einem Triebwerk mit einer Triebwerksverkleidung zugeordnet ist, deren hinterer Bereich in Axialrichtung des Triebwerks von einer geschlossenen Vorwärtsschubposition in eine nach hinten verschobene Schubumkehrposition verschiebbar ist, in welcher sich ein im Wesentlichen ringförmiger Freiraum zu einem vorderen, feststehenden Bereich der Triebwerksverkleidung ergibt. Dabei ist vorgesehen, dass an der Triebwerksverkleidung Führungsschienen angeordnet sind, in welchen mittels Rollen oder Schieberelementen Lagerelemente verfahrbar sind, mit welchen der hintere Bereich der Triebwerksverkleidung gelagert ist.

Bei den aus dem Stand der Technik bekannten Lösungen erweist es sich als nachteilig, dass die Führungsschienen einen großen Platzbedarf haben. Aus diesem Grunde ist die Möglichkeit zur Anbringung von Dämpfungsstrukturen zur Schalldämpfung erheblich eingeschränkt. Die vorbekannten Ausgestaltungsvarianten sind hinsichtlich der Krafteinleitung und der Befestigung der Führungsschiene aufwändig in der Herstellung und bringen ein hohes Gewicht mit sich.

Die WO 2012/022900 A1 beschreibt eine Lagerung für eine Schubumkehrvorrichtung, bei welcher Schienen mit einem schwalbenschwanzförmigen Querschnitt verwendet werden. Die Schienen sind einstückig in einer unterschiedlichen Konfiguration in einer Schienenplatte ausgebildet. Nähere Details zeigt die Druckschrift nicht. Eine ähnliche Konstruktion ist auch aus der FR 2 926 605 A1 bekannt.

Eine weitere Schiene für eine Schubumkehrvorrichtung beschreibt die WO 2014/023901 A1. Die Schiene ist C-förmig ausgestaltet.

Eine weitere Schienenkonstruktion beschreibt die EP 0 155 887 A1. Dabei sind Schienen mit einem kreisförmigen Querschnitt in einer U-förmigen Halterung befestigt.

Der Erfindung liegt die Aufgabe zugrunde, eine Fluggasturbinenschubumkehrvorrichtung der eingangs genannten Art zu schaffen, welche bei einfachem Aufbau und einfacher, kostengünstiger Herstellbarkeit eine platzsparende und mit geringem Gewicht realisierbare Führungsschienen-Struktur ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Führungsschienen einen ovalen, C-förmigen, an einer Längsseite mit einer schlitzartigen Öffnung versehenen Querschnitt aufweisen und an gegenüber mittig angeordneten, einstückig mit dem C-förmigen Querschnitt ausgebildeten Lageransätzen gelagert sind.

Die erfindungsgemäße Lösung bietet somit die Möglichkeit, die Führungsschienen erheblich schmäler auszubilden. Unter der Angabe oval ist im Rahmen der Erfindung eine Ausgestaltung zu verstehen, welche in einer Längsrichtung eine größere Erstreckung aufweist, als in der anderen Längsrichtung. Somit ist es möglich, erfindungsgemäß Rollen oder Schieberelemente mit einem großen Durchmesser in einer schmalen Führungsschiene unterzubringen. Durch die erfindungsgemäß vorgesehene Befestigung durch die einander gegenüberliegenden, mittig angeordneten Lageransätze ist es möglich, die Führungsschiene platzsparend zu befestigen. Hierdurch ergeben sich zusätzliche Gewichtseinsparungen. Weiterhin wird durch die schmaleren Schienen zusätzlich Bauraum zur Verfügung gestellt, welcher für eine Dämpfungsstruktur genutzt werden kann.

Die erfindungsgemäß vorgesehene Triebwerksverkleidung umgibt das Triebwerk konzentrisch zur Triebwerksachse. Infolgedessen ist der axial zu verschiebende hintere Bereich der Triebwerksverkleidung ebenfalls im Wesentlichen ringförmig oder teilringförmig ausgebildet. Die erfindungsgemäßen Führungsschienen erstrecken sich im Wesentlichen parallel zur Triebwerksachse, so dass eine schmälere Ausgestaltung der Führungsschienen dazu führt, dass diese in Umfangsrichtung der Triebwerksverkleidung schmäler sind. Somit ergibt sich der oben beschriebene Freiraum zur Unterbringung der Dämpfungsstruktur insbesondere in Umfangsrichtung der Triebwerksverkleidung.

In besonders günstiger Ausgestaltung der Erfindung ist vorgesehen, dass die Lageransätze an den Schmalseiten des ovalen Querschnitts angeordnet sind. Die Lageransätze sind somit, bezogen auf die Einbausituation der Führungsschienen radial innenliegend und radial außenliegend zur Triebwerksachse angeordnet. Hierdurch ergibt sich ein günstiger Kraftfluss innerhalb der Führungsschiene.

Die Lageransätze sind an ihren freien Endbereichen bevorzugterweise abgewinkelt ausgebildet, um eine einfache, kostengünstige und gewichtsoptimierte Befestigung an den jeweiligen Bereichen der Triebwerksverkleidung zu ermöglichen.

Weiterhin kann es günstig sein, wenn die Führungsschiene an ihrem mittleren Bereich, gegenüberliegend zu der sich in Längsrichtung der Führungsschiene erstreckenden Öffnung einen Befestigungsansatz aufweist. Dieser dient zur zusätzlichen Lagerung der Führungsschiene bzw. zur Befestigung einer Wandung der radial innenliegenden Dämpfungsstruktur. Die Dämpfungsstruktur ist bevorzugterweise als Wabenstruktur oder in ähnlicher Weise ausgebildet.

Die erfindungsgemäß vorgesehenen Rollen oder Schieberelemente, welche längs der Führungsschiene an ihrem Innenquerschnitt verfahrbar sind, sind in günstiger Weiterbildung der Erfindung in Form von Außenringen eines sphärischen Wälzlagers ausgebildet. Durch das sphärische Wälzlager ergibt sich eine gute Bewegungsfreiheit. Es ist jedoch auch möglich, übliche zylindrische Wälzlager vorzusehen.

In besonders vorteilhafter Ausgestaltung der Erfindung ist vorgesehen, dass die Führungsschiene aus einem Composite-Material gefertigt ist, insbesondere einem mit einer Faserverstärkung versehenen Kunststoffmaterial. Auch die Lageransätze und der Befestigungsansatz sind bevorzugterweise einstückig mit der Führungsschiene ausgebildet und aus diesem Material gefertigt. Weiterhin kann es besonders günstig sein, wenn die Führungsschiene einstückig mit zumindest einem Strukturelement der Schubumkehrvorrichtung ausgebildet ist, beispielsweise einem Führungselement für Kaskaden oder ähnliches.

Erfindungsgemäß ergibt sich somit in vorteilhafter Weise, dass zusätzliche direkte Lastpfade an der Führungsschiene geschaffen sind, die zu einer optimierten Ausgestaltung der Führungsschiene beitragen. Durch die erfindungsgemäße Verwendung eines Composite-Materials wird die Struktur optimiert und es ergibt sich eine verbesserte Orientierung der Fasern der Faserverstärkung. Insgesamt wird, im Vergleich zum Stand der Technik, die Anzahl der Einzelteile erheblich reduziert, so dass sich ein geringeres Gewicht und niedrigere Herstellungskosten ergeben. Weiterhin führt der reduzierte Bauraum der Führungsschiene zu der Möglichkeit, die Dämpfungsstruktur vergrößert auszubilden und/oder einen geringeren Flächenbedarf der Lärmdämpfungsfläche zu benötigen.

Die erfindungsgemäße Ausgestaltung der Führungsschiene kann im Rahmen der Erfindung auch an anderen Strukturteilen eines Fluggasturbinentriebwerkes Verwendung finden, bei welchen Longitudinalbewegungen zu realisieren sind, zum Beispiel bei einer variablen Fandüse.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2, 3: perspektivische Ansichten einer erfindungsgemäße Fluggasturbine von schräg vorne in Vorwärtsschubposition bzw. Schubumkehrposition,
- Fig.4: eine vereinfachte Seiten-Schnittansicht eines Ausführungsbeispiels einer erfindungsgemäßen Führungsschiene im eingebauten Zustand,
- Fig. 5: eine perspektivische Teilansicht eines weiteren Ausführungsbeispiels der Führungsschiene,
- Fig. 6: eine weitere Modifikation der erfindungsgemäßen Führungsschiene,
- Fig. 7: eine perspektivische Ansicht einer Führungsschiene mit einem integrierten Strukturelement, und
- Fig.8: eine weitere Detailansicht in einer Weiterbildung des Ausführungsbeispiels der Fig. 7.

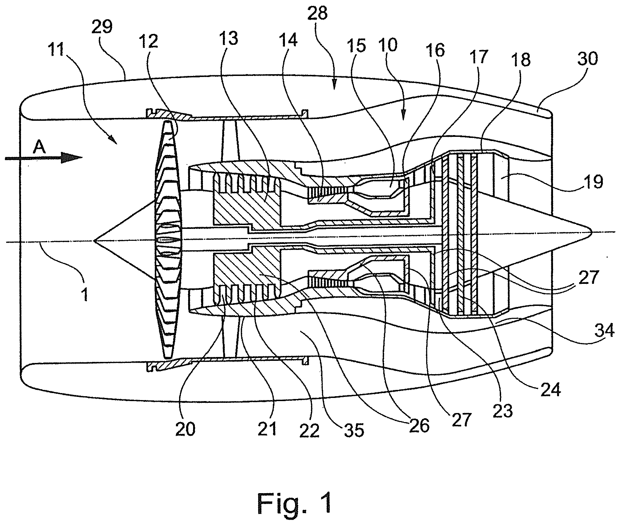

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, eine Ringbrennkammer 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Weiterhin zeigt die Fig. 1 eine Kerntriebwerksverkleidung 34 eines Nebenstromkanals 35 sowie eine äußere Triebwerksverkleidung 28.

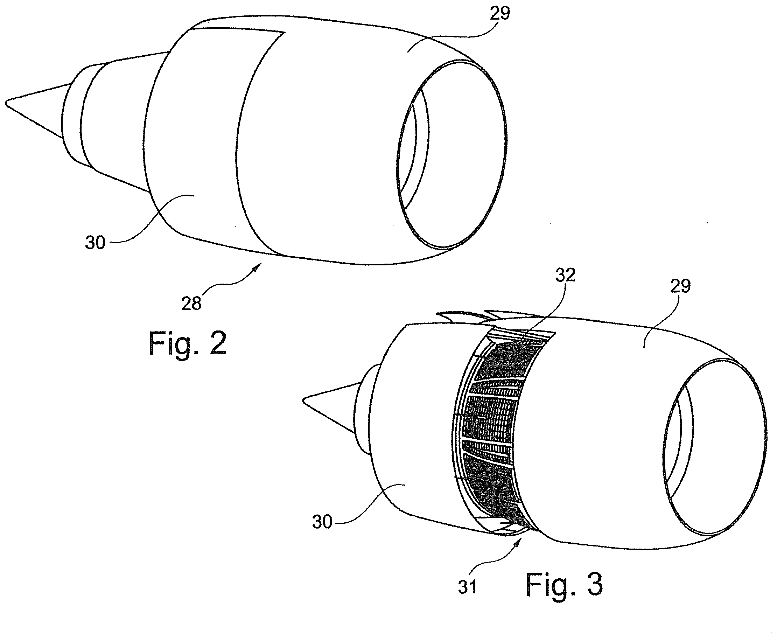

Die Fig. 2 und 3 zeigen jeweils vereinfachte perspektivische Darstellungen der erfindungsgemäßen Fluggasturbine mit Schubumkehrvorrichtung. Die Fig. 2 zeigt eine Vorwärtsschubposition in Ansicht von schräg vorne, in welcher die Triebwerksverkleidung 28 geschlossen ist, um eine ungestörte Durchströmung des Nebenstromkanals zu ermöglichen. Es ist dabei insbesondere zu erkennen, dass ein vorderer, stationär bleibender Bereich 29 der Triebwerksverkleidung 28 den ersten Teil der Begrenzung des Nebenstromkanals 37 bildet, während ein hinterer Bereich 30 der Triebwerksverkleidung 28 in Axialrichtung verschiebbar ist. Die Fig. 2 zeigt somit die Vorwärtsschubposition, während die Fig. 3 die Schubumkehrposition darstellt, in welcher der hintere Bereich 30 der Triebwerksverkleidung 28 axial verschoben ist. Hierdurch ergibt sich ein ringförmiger Freiraum 31, der lediglich durch den im Einzelnen nicht dargestellten Bereich eines Pylonen zur Aufhängung der Fluggasturbine unterbrochen wird.

Die Umlenkelemente 32 sind gitterartig oder kaskadenartig ausgebildet und umfassen eine Vielzahl von strömungsoptimiert ausgebildeten Leitelementen.

Die Umlenkelemente 32 können beispielsweise als Gussteile oder als Kompositteile gefertigt sein.

In der Beschreibung beziehen sich die Begriffe "vorne" und "hinten" auf die Durchströmungsrichtung der Fluggasturbine, "vorne" entspricht dem Einströmbereich, "hinten" entspricht dem Auslassbereich.

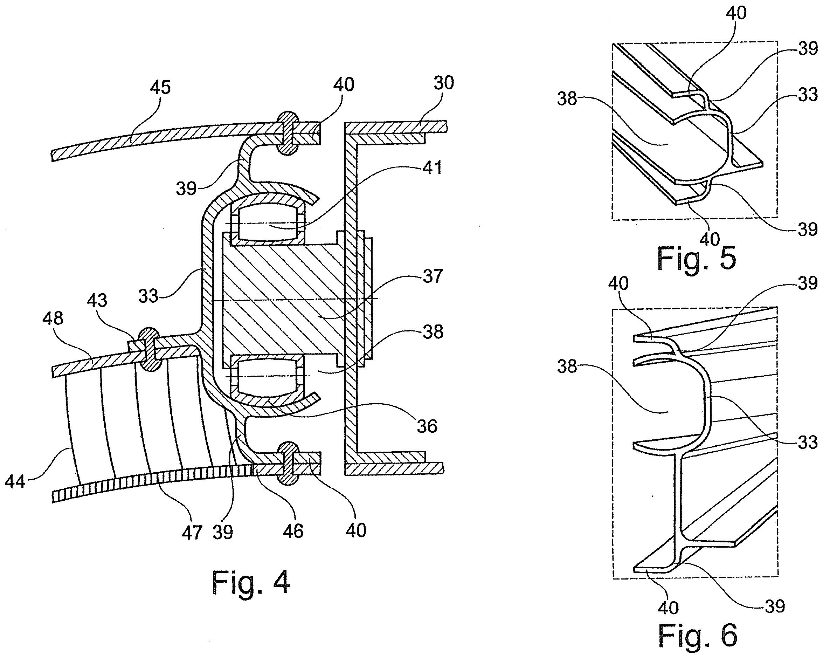

Die Fig. 4 zeigt eine Schnittansicht eines ersten Ausführungsbeispiels einer erfindungsgemäßen Führungsschiene 33 im eingebauten Zustand. Die Führungsschiene 33 weist einen ovalen oder länglich abgerundeten Querschnitt auf, der an einer Seite eine sich in Längsrichtung erstreckende Öffnung 38 aufweist. In der Führungsschiene 33 ist ein radachsenartiges Lagerelement 37 längs verfahrbar mittels einer Rolle 36 gelagert. Alternativ ist auch ein Schieberelement möglich. Das Lagerelement 37 ist mit dem in Axialrichtung der Fluggasturbine verschiebbaren hinteren Bereich der Verkleidung 30 verschraubt. Die Rolle 36 bildet einen Außenring eines Wälzlagers 41. Radial außenliegend und radial innenliegend (bezogen auf die Triebwerksachse 1) weist die Führungsschiene 33 an ihrer Schmalseite jeweils einen Lageransatz 39 auf, dessen Endbereich 40 jeweils umgebogen ist. Der radial äußere (in Fig. 4 oben liegende) Endbereich 40 ist mittels Schrauben oder Nieten mit einer Außenwandung 45 der Triebwerksverkleidung 28 verbunden, während der radial innenliegende Endbereich 40 mit einer Innenwandung 46 verbunden ist. Die Innenwandung 46 ist mit Ausnehmungen 47 aufweisenden Bauteilen versehen, an deren Innenseite eine Dämpfungsstruktur 44 in Wabenbauweise befestigt ist. Die Dämpfungsstruktur 44 wird durch eine Rückwand 48 begrenzt, welche mit einem Befestigungsansatz 43, der im mittleren Bereich der Führungsschiene 33 vorgesehen ist, verbunden ist. Es ergibt sich, dass die in Umfangsrichtung schmale Ausgestaltung der Führungsschiene 33 mehr Einbauraum für die Dämpfungsstruktur 44 ermöglicht.

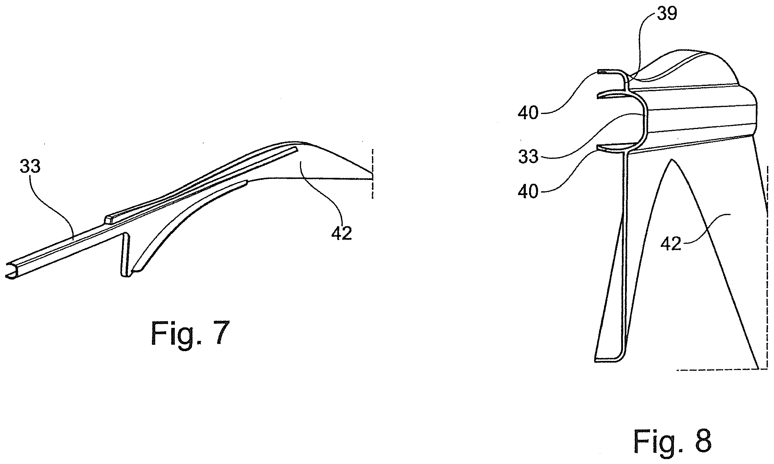

Die Fig. 5 und 6 zeigen modifizierte Querschnitte der erfindungsgemäßen Führungsschiene 33. Insgesamt ist erfindungsgemäß die Führungsschiene 33 aus einem Composite-Material hergestellt, so dass die gezeigten Modifikationen mit geringem Gewicht und günstigen Herstellungskosten realisierbar sind. Es ist erfindungsgemäß auch möglich, ein metallisches Einlegeteil in dem Composite-Material vorzusehen. Die Fig. 7 und 8 zeigen Weiterbildungen der Erfindung, bei welchen die Führungsschiene 33 einstückig mit zumindest einem weiteren Strukturelement 42 verbunden ist, welches Teil der Schubumkehrvorrichtung ist.

### Bezugszeichenliste

- 1: Triebwerksachse / Mittelachse
- 10: Gasturbinentriebwerk
- 11: Lufteinlass
- 12: im Gehäuse umlaufender Fan
- 13: Mitteldruckkompressor
- 14: Hochdruckkompressor
- 15: Ringbrennkammer
- 16: Hochdruckturbine
- 17: Mitteldruckturbine
- 18: Niederdruckturbine
- 19: Abgasdüse
- 20: Leitschaufeln
- 21: Triebwerksgehäuse / Verkleidung
- 22: Kompressorlaufschaufeln
- 23: Leitschaufeln
- 24: Turbinenschaufeln
- 26: Kompressortrommel oder -Scheibe
- 27: Turbinenrotornabe
- 28: Triebwerksverkleidung (nacelle)
- 29: Vorderer Bereich der Verkleidung
- 30: Hinterer Bereich der Verkleidung
- 31: Ringförmiger Freiraum
- 32: Umlenkelement (Kaskade)
- 33: Führungsschiene
- 34: Kerntriebwerksverkleidung
- 35: Nebenstromkanal
- 36: Rolle
- 37: Lagerelement
- 38: Öffnung
- 39: Lageransatz
- 40: Endbereich
- 41: Wälzlager
- 42: Strukturelement
- 43: Befestigungsansatz
- 44: Dämpfungsstruktur
- 45: Außenwandung
- 46: Innenwandung
- 47: Ausnehmung
- 48: Rückwand

## Patentansprüche

1. Fluggasturbinen-Schubumkehrvorrichtung mit einem Triebwerk (10), mit einer Triebwerksverkleidung (28), deren hinterer Bereich (30) in Axialrichtung des Triebwerks (10) von einer geschlossenen Vorwärtsschubposition in eine nach hinten verschobene Schubumkehrposition verschiebbar ist, in welcher sich ein im Wesentlichen ringförmiger Freiraum (31) zu einem vorderen, feststehenden Bereich (29) der Triebwerksverkleidung (28) ergibt, wobei an der Triebwerksverkleidung (28) Führungsschienen (33) angeordnet sind, in welchen mittels Rollen (36) oder Schieberelementen Lagerelemente (37) verfahrbar sind, mit welchen der hintere Bereich (30) der Triebwerksverkleidung (28) gelagert ist, **dadurch gekennzeichnet, dass** die Führungsschienen (33) einen ovalen, C-förmigen, an einer Längsseite mit einer schlitzartigen Öffnung (38) versehenen Querschnitt aufweisen und an radial außenliegend und radial innenliegend, bezogen auf eine Triebwerksachse (1), einander gegenüberliegend und mittig angeordneten, einstückig mit dem C-förmigen Querschnitt ausgebildeten Lageransätzen (39), welche an den Schmalseiten des ovalen Querschnitts ausgebildet sind, gelagert sind, und dass die Rollen (36) oder Schieberelemente in Form von Außenringen eines sphärischen Wälzlagers (41) ausgebildet sind.

2. Vorrichtung nach Anspruch 1, **dadurch gekennzeichnet, dass** die Lageransätze (39) an ihren freien Endbereichen (40) abgewinkelt ausgebildet sind.

3. Vorrichtung nach einem der Ansprüche 1 oder 2, **dadurch gekennzeichnet, dass** die Führungsschiene (33) an ihrem mittleren Bereich, gegenüberliegend zu der Öffnung (38) einen Befestigungsansatz (43) aufweist.

4. Vorrichtung nach einem der Ansprüche 1 bis 3, **dadurch gekennzeichnet, dass** die Führungsschiene (33) aus einem Composite-Material gefertigt ist.

5. Vorrichtung nach einem der Ansprüche 1 bis 4, **dadurch gekennzeichnet, dass** die Führungsschiene (33) einstückig mit zumindest einem Strukturelement (42) der Schubumkehrvorrichtung ausgebildet ist.

## Claims

1. Aircraft gas turbine thrust-reversing device with an engine (10) having an engine cowling (28) whose rear area (30) can be moved in the axial direction of the engine (10) from a closed forward-thrust position into a rearwardly moved thrust-reversing position in which a free, substantially annular space (31) to a front and fixed area (29) of the engine cowling (28) is present, where on the engine cowling (28) guide rails (33) are arranged, inside which mounting elements (37) can be moved by means of rollers (36) or sliding elements, with which mounting elements (37) the rear area (30) of the engine cowling (28) is mounted, **characterized in that** the guide rails (33) have an oval and C-shaped cross-section, provided on a longitudinal side with a slot-like opening (38) and are mounted with reference to an engine axis (1) on radially outer and radially inner mounting projections (39) arranged centrally and opposite to one another and designed in one piece with the C-shaped cross-section, said mounting projections (39) being arranged on the narrow sides of the oval cross-section, and that the rollers (36) or sliding elements are designed in the form of outer races of a spherical roller bearing (41).

2. Device in accordance with Claim 1, **characterized in that** the mounting projections (39) are designed angled at their free end areas (40).

3. Device in accordance with one of the Claims 1 or 2, **characterized in that** the guide rail (33) has at its center area, opposite to the opening (38) a fastening projection (43).

4. Device in accordance with one of the Claims 1 to 3, **characterized in that** the guide rail (33) is produced from a composite material.

5. Device in accordance with one of the Claims 1 to 4, **characterized in that** the guide rail (33) is designed in one piece with at least one structural element (42) of the thrust-reversing device.

## Revendications

1. Inverseur de poussée de turbine à gaz avec un moteur (10) doté d'un carénage de moteur (28) dont la zone arrière (30) est déplaçable dans le sens axial du moteur (10), d'une position fermée de poussée en avant vers une position décalée vers l'arrière, d'inversion de poussée, dans laquelle un espace libre (31) de forme essentiellement annulaire apparaît vers une zone avant fixe (29) du carénage de moteur (28), sachant que des rails de guidage (33) sont disposés sur le carénage de moteur (28), dans lesquels des éléments de logement (37) sont déplaçables au moyen de galets (36) ou d'éléments coulissants, lesquels éléments de logement (37) supportant la zone arrière (30) du carénage de moteur (28), **caractérisé en ce que** les rails de guidage (33) présentent une section ovale, en forme de C, pourvue d'une ouverture en forme de fente (38) sur un côté longitudinal et qu'ils sont logés sur des épaulements de logement (39) réalisés d'un seul tenant avec la section en forme de C, situés radialement à l'extérieur et radialement à l'intérieur, par rapport à un axe du moteur (1) et disposés en face les uns des autres et au centre, lesdits épaulements de logement (39) étant disposés sur les côtés étroits de la section ovale, et que les galets (36) ou éléments coulissants sont conçus sous forme d'anneaux extérieurs d'un palier à roulement sphérique (41).

2. Dispositif selon la revendication n° 1, **caractérisé en ce que** les épaulements de logement (39) sont coudés au niveau de leurs extrémités libres (40).

3. Dispositif selon une des revendications n° 1 ou n° 2, **caractérisé en ce que** le rail de guidage (33) présente une patte de fixation (43) sur sa zone médiane, du côté opposé à l'ouverture (38).

4. Dispositif selon une des revendications n° 1 à n° 3, **caractérisé en ce que** le rail de guidage (33) est fabriqué dans un matériau composite.

5. Dispositif selon une des revendications n° 1 à n° 4, **caractérisé en ce que** le rail de guidage (33) est réalisé d'un seul tenant avec au moins un élément structural (42) de l'inverseur de poussée.
